# EUROPEAN PATENT SPECIFICATION

(11) **EP 3 244 082 B1**
(45) Date of publication and mention of the grant of the patent: **07.11.2018**
(21) Application number: 17169923.4
(22) Date of filing: 08.05.2017
(51) Int. Cl.: F16D 27/10, F16D 27/14, F16D 27/102, F04D 13/02, F04D 13/06, F16D 41/10, F16D 41/08

(54) **DRIVING FORCE TRANSMISSION DEVICE**
VORRICHTUNG ZUR ÜBERTRAGUNG EINER ANTRIEBSKRAFT
DISPOSITIF DE TRANSMISSION DE FORCE DE CONDUITE

(30) Priority: 13.05.2016 JP 2016097112
(43) Date of publication of application: 15.11.2017
(73) Proprietor: JTEKT CORPORATION, Osaka-shi, Osaka 542-8502 (JP)
(72) Inventor: ARAMOTO, Gento, Osaka-shi, Osaka 542-8502 (JP); HAMANO, Kenichi, Osaka-shi, Osaka 542-8502 (JP)
(74) Representative: Winter, Brandl, Fürniss, Hübner, Röss, Kaiser, Polte - Partnerschaft mbB

(56) References cited:
- WO-A1-2009/075256
- WO-A1-2009/148014
- JP-A- 2013 092 191

## Description

### BACKGROUND OF THE INVENTION

### 1. Field of the Invention

The invention relates to a driving force transmission device that switches between on and off of transmission of a rotational force between a first shaft and a second shaft that are disposed coaxially with each other.

### 2. Description of the Related Art

A rotation transmission device disclosed in Japanese Patent Application Publication No. 2013-092191 (JP 2013-092191 A) includes a two-way clutch and an electromagnetic clutch that engages and disengages the two-way clutch. The two-way clutch includes an outer ring, an inner ring, pairs of rollers, a control cage, and a rotary cage. The pairs of rollers are mounted between the outer ring and the inner ring. The control cage and the rotary cage hold the pairs of rollers. The control cage and the rotary cage define the circumferential width of each pair of rollers.

When a current is not applied to an electromagnetic coil of the electromagnetic clutch, the circumferential width of the pair of rollers is relatively large. In this state, the rollers are pressed away from each other by an elastic member disposed between the rollers. Accordingly, the rollers engage with both the inner peripheral surface of the outer ring and the outer peripheral surface of the inner ring without any clearance. Thus, the two-way clutch is engaged.

Meanwhile, when a current is applied to the electromagnetic coil of the electromagnetic clutch, a force is applied to the control cage. The control cage and the rotary cage are rotated relative to each other by this force, so that the circumferential width of the pair of rollers is reduced. Accordingly, the rollers are pressed by the control cage and the rotary cage to move toward each other. The rollers are then disengaged from the inner peripheral surface of the outer ring and the outer peripheral surface of the inner ring. Thus, the two-way clutch is disengaged.

In the rotation transmission device disclosed in JP 2013-092191 A, when the two-way clutch is engaged, each of the rollers engages (meshes with) the inner ring and the outer ring without any clearance, and hence the rotational torque often remains inside the two-way clutch. If this residual rotational torque is large, when the control cage is relatively rotated to switch the two-way clutch from the engaged state to the disengaged state, at least one of the rollers may not be disengaged from a first shaft (inner ring) or a second shaft (outer ring). In this case, the two-way clutch may not be smoothly switched from the engaged state to the disengaged state. In other words, the state of transmission of a rotational force between the first shaft and the second shaft may not be smoothly switched from the on state to the off state. There is therefore a demand for a driving force transmission device capable of smoothly switching the state of transmission of a rotational force between a first shaft and a second shaft from the on state to the off state.

Further, WO 2009/075256 A1 and WO 2009/148014 A1 disclose a driving force transmission device having the features of the preamble of claim 1.

The inventors of the present invention have proposed changing the relative circumferential positions of two cage members by displacing a separator interposed between the cage members. Depending on the conditions of the separator, the attitude of the separator in the rotational direction about its shaft portion may be inclined with respect to the expected attitude. Even in such a case, it is desired to maintain a satisfactory steering feeling in the on state.

### SUMMARY OF THE INVENTION

It is one object of the present invention to provide a driving force transmission device capable of smoothly switching the state of transmission of a rotational force between a first shaft and a second shaft, and maintaining a satisfactory steering feeling in an on state.

According to one aspect of the invention, there is provided a driving force transmission device that is disposed between a first shaft and a second shaft which are disposed coaxially with each other, and that switches between on and off of transmission of a rotational force between the first shaft and the second shaft, the first shaft including an outer peripheral surface portion, the second shaft including an inner peripheral surface portion facing the outer peripheral surface portion, wherein at least one wedge space is formed between the outer peripheral surface portion and the inner peripheral surface portion. The driving force transmission device includes: a pair of rollers disposed in the wedge space; an elastic body elastically biasing the rollers away from each other in a circumferential direction; a pair of cage members holding each of the rollers in the wedge space, the cage members being movable relative to each other and defining a circumferential width of the pair of rollers; and a separator including a shaft portion and displaceable in an axial direction of the first shaft and the second shaft, the separator being configured to change relative positions of the cage members in the circumferential direction when the separator is displaced in the axial direction; wherein: when the relative positions of the cage members in the circumferential direction are changed from first positions to second positions, the rollers are moved toward each other against an elastic biasing force of the elastic body such that an off state is achieved in which each of the rollers are disengaged from the outer peripheral surface portion or the inner peripheral surface portion to have a clearance therefrom; when the relative positions of the cage members in the circumferential direction are changed from the second positions to the first positions, the rollers are moved away from each other by the elastic biasing force such that an on state is achieved in which one of the rollers on a downstream side in a rotational direction engages with the outer peripheral surface portion and the inner peripheral surface portion without any clearance while the other the rollers on an upstream side in the rotational direction has a clearance from the outer peripheral surface portion or the inner peripheral surface portion; and the first positions of the cage members are defined when the cage members that are disposed with the shaft portion interposed therebetween in the circumferential direction are in contact with an outer surface of the shaft portion.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 schematically illustrates the configuration of a steering system having mounted thereon a clutch unit as a driving force transmission device according to an embodiment of the present invention;
FIG. 2 is a cross-sectional view illustrating the clutch unit;
FIG. 3 is a cross-sectional view taken along the section line III-III of FIG. 2;
FIG. 4 is a perspective view illustrating the configuration of a two-way clutch included in the clutch unit;
FIG. 5 is an exploded perspective view illustrating the configuration of the two-way clutch;
FIGS. 6A and 6B are perspective views illustrating the configuration of a separator;
FIG. 7 is a cross-sectional view schematically illustrating the off state of the clutch unit, taken along the section line VII-VII of FIG. 3;
FIG. 8 schematically illustrates the off state of the clutch unit;
FIG. 9 schematically illustrates the on state of the clutch unit;
FIGS. 10A and 10B schematically illustrate the on state of the clutch unit, wherein

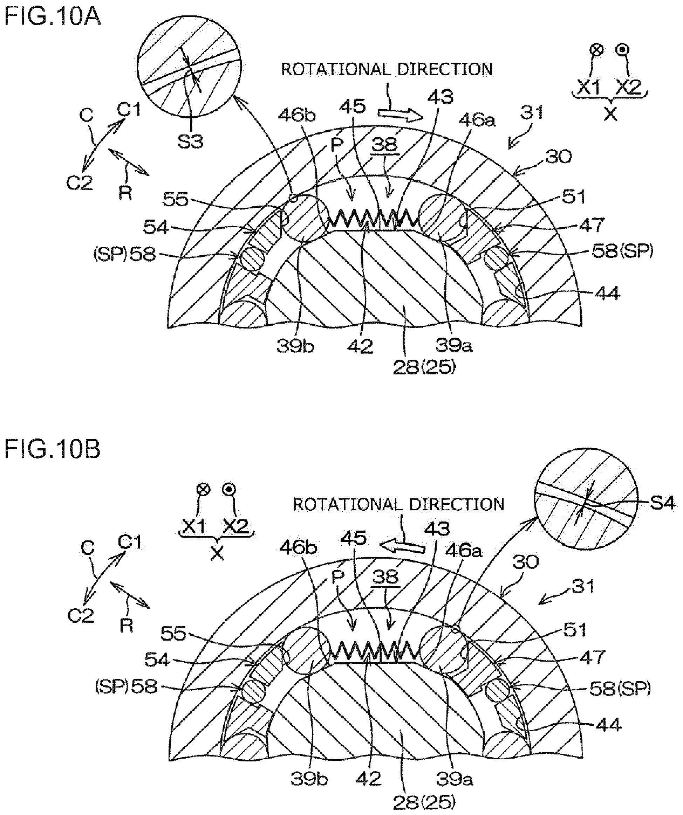

FIG. 10A illustrates a state in which an output shaft is rotated in a C1 direction with respect to an input shaft, and
FIG. 10B illustrates a state in which the output shaft is rotated in a C2 direction with respect to the input shaft;

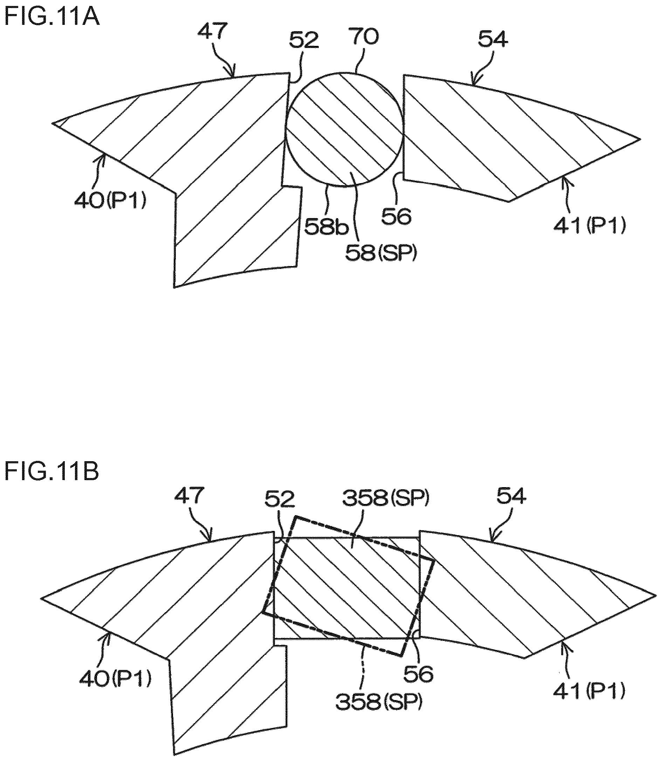

FIGS. 11A and 11B are partial enlarged cross-sectional views illustrating restricting the distance between cages;

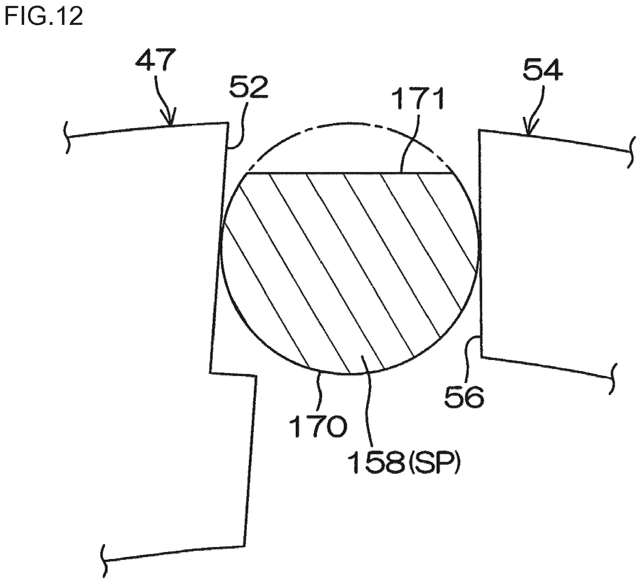

FIG. 12 is a cross-sectional view illustrating a first modification of the present invention; and

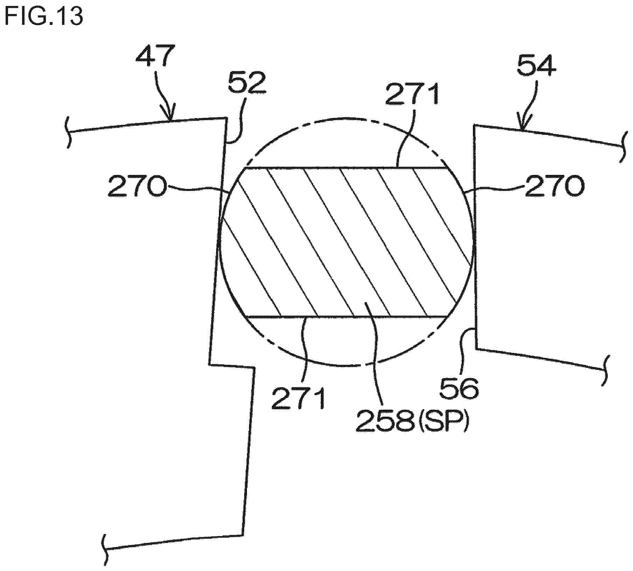

FIG. 13 is a cross-sectional view illustrating a second modification of the present invention.

### DETAILED DESCRIPTION OF EMBODIMENTS

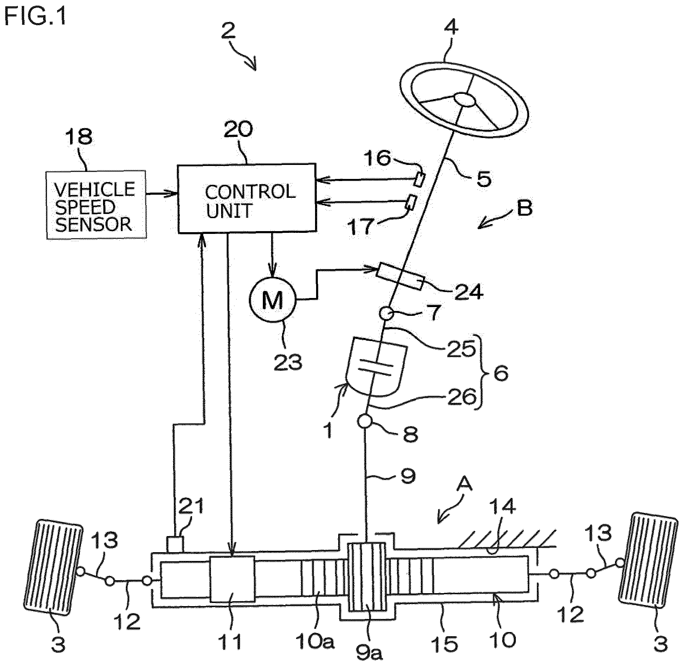

Embodiments of the present invention will be described in detail below with reference to the accompanying drawings. FIG. 1 schematically illustrates the configuration of a steering system 2 having mounted thereon a clutch unit 1 that is an example of a driving force transmission device according to an embodiment of the present invention. The steering system 2 is a so-called steer-by-wire system in which a steering operation mechanism A for steering steered wheels 3 is not mechanically linked to a steering mechanism B including a steering member 4 such as a steering wheel and a steering shaft 5. In order to implement a mechanical fail-safe mechanism of the steer-by-wire system, the clutch unit 1 is interposed between the steering shaft 5 and a pinion shaft 9 of the steering operation mechanism A such that the clutch unit 1 switches between on (connection) and off (disconnection) of transmission of a rotational force.

The steering system 2 includes the steering operation mechanism A and the steering mechanism B. The steering operation mechanism A includes a steered shaft 10, a steering operation actuator 11, a pair of tie rods 12, and a pair of knuckle arms 13. Each tie rod 12 has one end coupled to the corresponding end of the steered shaft 10, and has the other end coupled to the corresponding steered wheel 3 via the corresponding knuckle arm 13. As the steered shaft 10 moves in the axial direction thereof (a vehicle width direction), the steered angle of the steered wheels 3 varies. The steering operation actuator 11 includes a motor (not illustrated) and a motion conversion mechanism (not illustrated) such as a ball screw device. The motion conversion mechanism such as a ball screw device converts the driving force of the motor into an axial movement of the steered shaft 10.

The steering system 2 further includes a rack housing 15 that accommodates a part of the pinion shaft 9 where a pinion 9a is formed and the steered shaft 10. The rack housing 15 is fixed to a vehicle body 14. The steering mechanism B includes a steering angle sensor 16 and a rotational torque sensor 17. The steering angle sensor 16 detects the steering angle of the steering member 4. The rotational torque sensor 17 detects the steering rotational torque applied to the steering member 4. The steering mechanism B includes a steered angle sensor 21 that detects the steered angle of the steered wheels 3, and a vehicle speed sensor 18 that detects the vehicle speed. Detection signals of various sensors including the steering angle sensor 16, the rotational torque sensor 17, the steered angle sensor 21, and the vehicle speed sensor 18 are input to a control unit 20 including an electronic control unit (ECU).

When the steering shaft 5 is rotated in response to an operation of the steering member 4, the control unit 20 sets a target steered angle based on the steering angle detected by the steering angle sensor 16 and the vehicle speed detected by the vehicle speed sensor 18. The control unit 20 drives and controls the steering operation actuator 11 based on the deviation between the target steered angle and the steered angle detected by the steered angle sensor 21. Thus, the steering operation mechanism A can be operated by the steering member 4.

The control unit 20 drives and controls a motor 23 based on the detection signals of the rotational torque sensor 17, the steering angle sensor 16, and so on so as to apply to the steering member 4 an appropriate reaction force in a direction opposite to the direction in which the steering member 4 is steered. The output rotation of the motor 23 is reduced in speed (amplified) by a speed reducer 24 and transmitted to the steering member 4 via the steering shaft 5. As mentioned above, the clutch unit 1 to which a driving force transmission device according to an embodiment of the present invention is applied is interposed between the steering shaft 5 and the pinion shaft 9. The clutch unit 1 implements a mechanism for fail-safe of the steering system 2.

The clutch unit 1 is disposed at the middle of an intermediate shaft 6 including an input shaft 25 as a first shaft and an output shaft 26 as a second shaft. One end of the intermediate shaft 6 is coupled to the steering shaft 5 via a universal joint 7. The other end of the intermediate shaft 6 is coupled to one end of the pinion shaft 9 via a universal joint 8. The pinion shaft 9 includes the pinion 9a at the other end thereof. The pinion 9a meshes with a rack 10a of the steered shaft 10.

The intermediate shaft 6 includes the input shaft 25 coupled to the steering shaft 5, and the output shaft 26 coupled to the pinion shaft 9. The input shaft 25 and the output shaft 26 are disposed coaxially with each other. The clutch unit 1 is interposed between the input shaft 25 and the output shaft 26. The clutch unit 1 is a device that can switch between on and off of transmission of a rotational force between the input shaft 25 and the output shaft 26.

When the vehicle is operating normally, the control unit 20 disengages the clutch unit 1 to mechanically separate the steering member 4 from the steering operation mechanism A. On the other hand, when the ignition of the vehicle is off, or when an abnormality occurs such as when the steer-by-wire system fails, the control unit 20 engages the clutch unit 1 to mechanically couple the steering member 4 to the steering operation mechanism A.

In this state, when the steering member 4 and the steering shaft 5 rotate in response to an operation of the steering member 4 by the driver, the steering rotational torque is transmitted from the steering member 4 to the steering shaft 5. The steering rotational torque is then transmitted to the pinion shaft 9 via the steering shaft 5 and the intermediate shaft 6, so that the pinion shaft 9 rotates. The rotation of the pinion shaft 9 is converted into an axial motion of the steered shaft 10. As the steered shaft 10 moves in the axial direction, the steered angle of the steered wheels 3 varies. Thus, the steering operation mechanism A can be operated directly by the steering member 4.

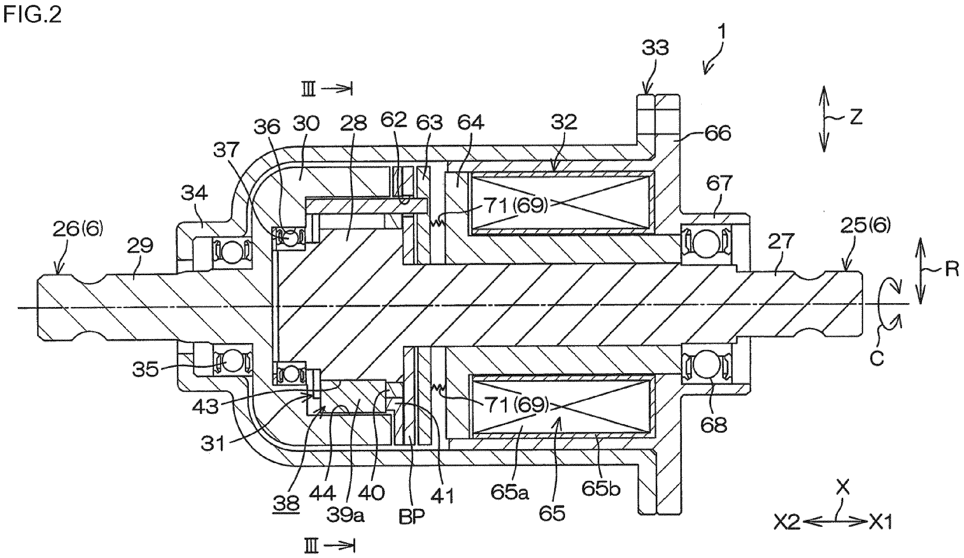

The clutch unit 1 is applicable not only to the intermediate shaft 6 of the steering system 2, but also to other shafts of the steering system. The clutch unit 1 is also applicable to shafts used in other devices than steering systems (for example, a main shaft of a machine tool, a propeller shaft for wind power generation, and an axle of a train). FIG. 2 is a cross-sectional view illustrating the clutch unit 1.

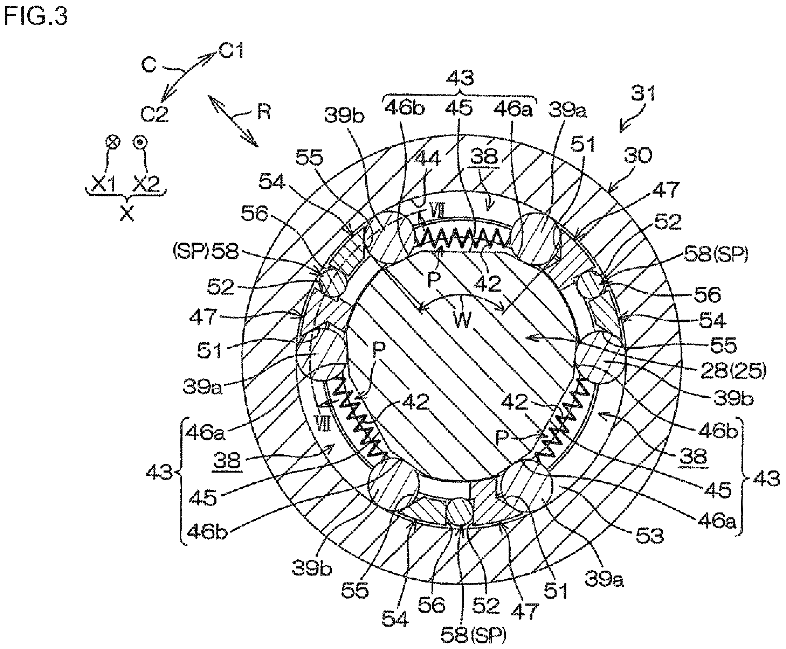

In the following description, the axial direction of the input shaft 25 and the output shaft 26 is referred to as an axial direction X. In the axial direction X, the direction from the output shaft 26 toward the input shaft 25 (the right direction in FIG. 2) is referred to as a first direction X1. The direction from the input shaft 25 toward the output shaft 26 (the left direction in FIG. 2) is referred to as a second direction X2. The second direction X2 is a direction opposite to the first direction X1. The radial direction of the input shaft 25 and the output shaft 26 is referred to as a radial direction R. The circumferential direction of the input shaft 25 and the output shaft 26 is referred to as a circumferential direction C. In the circumferential direction C, the direction that is clockwise when the input shaft 25 is viewed from the output shaft 26 side is referred to as a C1 direction (see FIG. 3). The direction that is counterclockwise when the input shaft 25 is viewed from the output shaft 26 side is referred to as a C2 direction (see FIG. 3).

The input shaft 25 includes an inner shaft 27 extending in the axial direction X, and an inner ring 28 coaxially coupled to a second-direction-X2-side end of the inner shaft 27. The output shaft 26 includes a shaft portion 29 extending in the axial direction X, and an outer ring 30 coaxially coupled to a first-direction-X1-side end of the shaft portion 29. The clutch unit 1 includes a two-way clutch 31, an electromagnetic attraction portion 32, and a housing 33. The two-way clutch 31 switches between on (connection) and off (disconnection) of transmission of a rotational force between the inner ring 28 and the outer ring 30. The electromagnetic attraction portion 32 drives engagement and disengagement of the two-way clutch 31. The housing 33 accommodates the two-way clutch 31 and the electromagnetic attraction portion 32.

The housing 33 has a cylindrical shape, and a cylindrical bearing support portion 34 is formed at a second-direction-X2-side end of the housing 33. A first rolling bearing 35 is disposed between the inner peripheral surface of the cylindrical bearing support portion 34 and the outer peripheral surface of the shaft portion 29 of the output shaft 26. The output shaft 26 is supported via the first rolling bearing 35 so as to be rotatable with respect to the housing 33 and not to be movable in the axial direction X. The inner ring 28 is made of a steel material, for example. The outer ring 30 has a tubular shape in which one end in the axial direction X is closed. The outer ring 30 is made of a steel material. An annular stepped portion 36 is formed at the bottom of the outer ring 30 to reduce the inner diameter of the outer ring 30. A second rolling bearing 37 is disposed between the inner periphery of the annular stepped portion 36 and the outer periphery of a second-direction-X2-side end of the inner ring 28. Thus, the inner ring 28 is supported so as to be rotatable with respect to the outer ring 30 and not to be movable in the axial direction X.

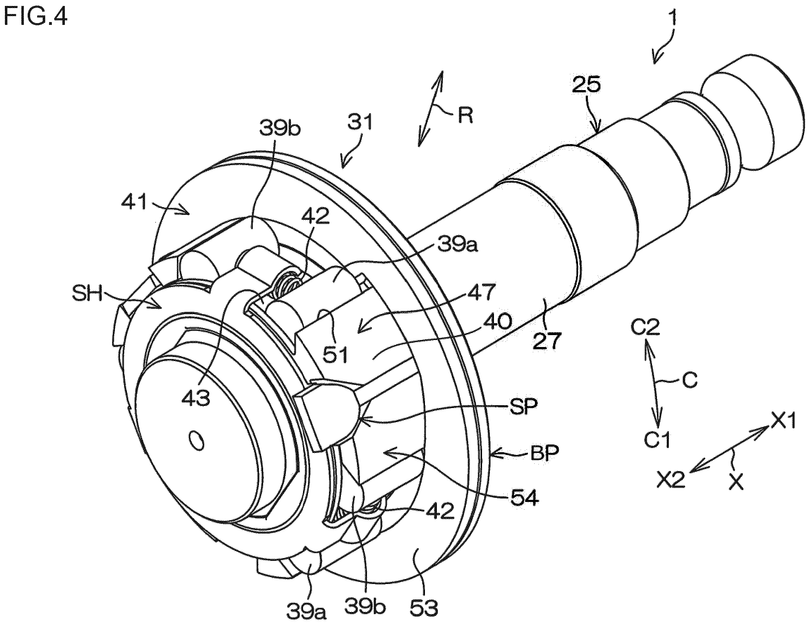

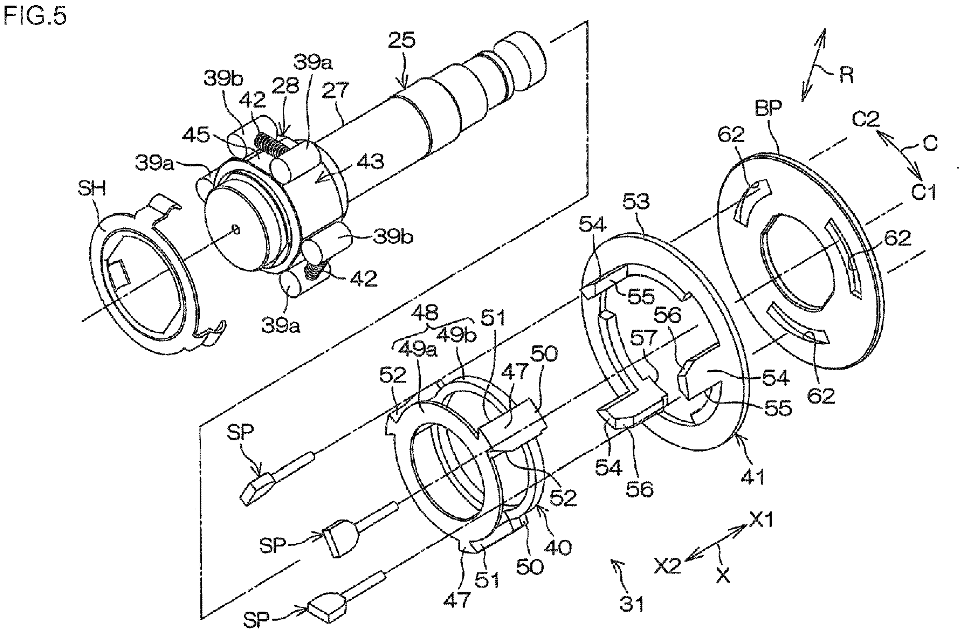

FIG. 3 is a cross-sectional view taken along the section line III-III of FIG. 2. FIG. 4 is a perspective view illustrating the configuration of the two-way clutch 31. FIG. 5 is an exploded perspective view illustrating the configuration of the two-way clutch 31. The two-way clutch 31 includes the inner ring 28, the outer ring 30, pairs of rollers 39a, 39b, a first cage (cage member) 40, a second cage (cage member) 41, elastic bodies 42, a plurality of (three in this embodiment) separators SP, and a back plate BP. The rollers 39a, 39b are arranged in the circumferential direction C such that a pair of the rollers 39a, 39b is arranged in each of two or more (three in this embodiment) wedge spaces 38. Each wedge space 38 is defined by the outer periphery of the inner ring 28 and the inner periphery of the outer ring 30. The first cage 40 is rotatable about the inner shaft 27, and holds the pairs of rollers 39a, 39b. The second cage 41 is rotatable about the inner shaft 27, and holds the pairs of rollers 39a, 39b. The elastic body 42 is disposed in each wedge space 38, and elastically presses the first and second rollers 39a, 39b away from each other in the circumferential direction C. The separators SP engage with each of the first cage 40 and the second cage 41 to change the relative positions of the first cage 40 and the second cage 41. The back plate BP supports the separators SP such that the separators SP are displaceable in the axial direction X.

The inner ring 28 has an outer peripheral surface portion including a plurality of (for example, three) cam surfaces (outer peripheral surface portions) 43. In this embodiment, the inner ring 28 and the inner shaft 27 are formed integrally with each other. However, the inner ring 28 and the inner shaft 27 may be formed as separate members. The outer ring 30 includes a cylindrical inner peripheral surface portion 44. As illustrated in FIG. 3, each wedge space 38 is defined by the inner peripheral surface portion 44 of the outer ring 30 and the corresponding cam surface 43 of the inner ring 28. Each wedge space 38 narrows toward the opposite ends thereof in the circumferential direction C. The elastic body 42 is disposed between the first roller 39a and the second roller 39b in each wedge space 38. Examples of the elastic body 42 include a coil spring. The elastic body 42 is supported by a main surface 45 (described below). The plurality of elastic bodies 42 are held on the inner ring 28 when an elastic body cage SH (see FIG. 4) collectively supporting the elastic bodies 42 is fitted to the inner ring 28.

The cam surfaces 43 are disposed at regular intervals in the circumferential direction C. Each cam surface 43 includes the flat main surface 45 and a pair of flat inclined surfaces 46a, 46b. The main surface 45 is orthogonal to the radial direction R. The inclined surfaces 46a, 46b are continuous with the opposite ends of the main surface 45 in the circumferential direction C, and are inclined with respect to the main surface 45 in the circumferential direction C. Each of the inclined surfaces 46a, 46b connects an end of the main surface 45 to a cylindrical peripheral surface of the inner ring 28. The inclined surfaces 46a, 46b are inclined toward the opposite sides in the circumferential direction C.

As illustrated in FIGS. 4 and 5, the first and second cages 40, 41 are rotatable relative to each other. The first cage 40 includes pillar-shaped first width defining portions 47 and an annular first support portion 48. The first support portion 48 collectively supports the first width defining portions 47. The first support portion 48 supports, for example, a plurality of first width defining portions 47. The first cage 40 is disposed such that the first support portion 48 is coaxial with the inner ring 28 and the outer ring 30, and is rotatable relative to the inner ring 28 and the outer ring 30. The same number of first width defining portions 47 as the number of pairs of rollers 39a, 39b (three in this embodiment) are provided. The first width defining portions 47 have a pillar shape extending in the axial direction X, and are disposed at regular intervals in the circumferential direction C. The first cage 40 is made of a resin material.

More specifically, the annular first support portion 48 includes a first annular portion 49a having a flat annular shape and a second annular portion 49b having an annular shape. The second annular portion 49b is disposed coaxially with and on the first direction X1 side of the first annular portion 49a. In this embodiment, the first width defining portions 47 couple the first annular portion 49a to the second annular portion 49b in the axial direction X. As illustrated in FIGS. 4 and 5, each first width defining portion 47 has a pillar shape extending in the axial direction X. Each first width defining portion 47 is disposed between the corresponding separator SP and the corresponding first roller 39a. Each first width defining portion 47 includes a first restricting projection 50 projecting from the second annular portion 49b to the first direction X1 side. Each first width defining portion 47 has a first pressing surface 51 on its side surface on the circumferential direction C2 side. The first pressing surface 51 can press the first roller 39a.

As illustrated in FIGS. 3 and 5, each first width defining portion 47 has a first sliding contacted surface 52 on its side surface on the circumferential direction C1 side. The first sliding contacted surface 52 can come into sliding contact with the separator SP. The first sliding contacted surface 52 is an inclined surface that is inclined in the circumferential direction C1 while extending in the first direction X1. As illustrated in FIG. 5, the second cage 41 includes a third annular portion 53 having a flat annular shape and a plurality of second width defining portions 54. The second width defining portions 54 project from the inner periphery of the third annular portion 53 toward the second direction X2 side. The third annular portion 53 is disposed to surround the outer periphery of the second annular portion 49b. The same number of second width defining portions 54 as the number of pairs of rollers 39a, 39b (three in this embodiment) are provided, and are disposed at regular intervals in the circumferential direction C. Each second width defining portion 54 is disposed between the corresponding separator SP and the corresponding second roller 39b.

The third annular portion 53 surrounds the outer periphery of the second annular portion 49b of the first cage 40. Accordingly, the first cage 40 may be referred to as an inner cage, and the second cage 41 may be referred to as an outer cage. Each second width defining portion 54 has a second pressing surface 55 on its side surface on the circumferential direction C1 side. The second pressing surface 55 can abut (press) the second roller 39b. Each second width defining portion 54 has a second sliding contacted surface 56 on its side surface on the circumferential direction C2 side. The second sliding contacted surface 56 can come into sliding contact with the separator SP. The second sliding contacted surface 56 is an inclined surface that is inclined in the circumferential direction C2 while extending in the first direction X1.

In the third annular portion 53, second restricting projections 57 (only one is illustrated in FIG. 5) projecting in the first direction X1 are each disposed in the same position as the corresponding second width defining portion 54. The second cage 41 is made of a resin material. As illustrated in FIG. 3, each wedge space 38 includes a pocket P defined by the first pressing surface 51 of the first width defining portion 47 and the second pressing surface 55 of the second width defining portion 54. The pocket P accommodates a pair of the rollers 39a, 39b such that the rollers 39a, 39b are arranged in the circumferential direction C. The pocket P is a space elongated in the circumferential direction C, and is an area in which the rollers 39a, 39b accommodated in the pocket P are movable in the circumferential direction C. The width of the pocket P, that is, a circumferential width W of the pair of rollers 39a, 39b can be changed by changing the relative positions of the first width defining portion 47 and the second width defining portion 54 in the circumferential direction C.

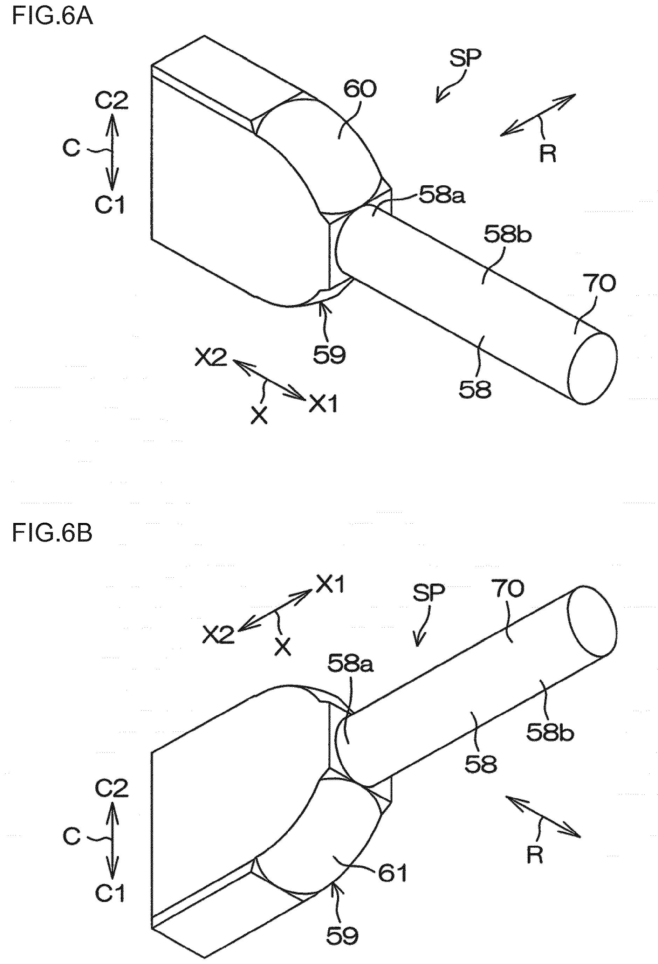

FIGS. 6A and 6B are perspective views illustrating the configuration of the separator SP. FIGS. 6A and 6B are views of the separator SP as viewed from two different directions. Each separator SP includes a shaft portion 58 extending in the axial direction X, and a wedge portion (bulging portion) 59 disposed at a second-direction-X2-side end 58a of the shaft portion 58 and widened while extending in the second direction X2.

The shaft portion 58 is a shaft having a cylindrical outer shape. The outer shape of the shaft portion 58 of the separator SP in a cross section about its axis is circular. In other words, the entire circumferential area of an outer peripheral surface (outer surface) 58b of the shaft portion 58 is formed by a cylindrical surface 70 that is concentric with the shaft portion 58. The diameter of the shaft portion 58 of the separator SP is constant in the axial direction X. The wedge portion 59 includes a first sliding contact surface 60 on its side surface on the circumferential direction C2 side and a second sliding contact surface 61 on its side surface on the circumferential direction C1 side.

The first sliding contact surface 60 is an inclined surface that is inclined in the circumferential direction C1 while extending in the first direction X1. In this embodiment, the first sliding contact surface 60 is a curved surface like a part of a spherical surface. The second sliding contact surface 61 is an inclined surface that is inclined in the circumferential direction C2 while extending in the first direction X1. In this embodiment, the second sliding contact surface 61 is a curved surface like a part of a spherical surface. The first sliding contact surface 60 and the second sliding contact surface 61 may be flat inclined surfaces.

As illustrated in FIGS. 2 and 5, the back plate BP has a flat annular shape, and is fitted to the inner shaft 27 of the input shaft 25 so as not to be movable in the axial direction X. The back plate BP is made of a steel material, for example. A surface of the back plate BP on the second direction X2 side is in sliding contact with each of the second annular portion 49b and the third annular portion 53. A plurality of (three in this example) elongated holes 62 extending through the back plate BP in the axial direction X are formed in the back plate BP at regular intervals in the circumferential direction C. The first restricting projection 50, the second restricting projection 57, and the separator SP are inserted through each elongated hole 62.

As illustrated in FIG. 2, the electromagnetic attraction portion 32 includes an armature 63, an annular rotor 64, and an electromagnet 65. The armature 63 is disposed so as to be movable together with the plurality of separators SP in the axial direction X. The rotor 64 faces the armature 63 from the first direction X1 side. The electromagnet 65 is disposed on the first direction X1 side of the rotor 64. The armature 63 has the shape of a disc in this embodiment. The armature 63 is made of a magnetic material. When a current is applied to the electromagnet 65 of the electromagnetic attraction portion 32, the armature 63 is attracted to the first direction X1 side.

The rotor 64 is fitted and fixed to the inner shaft 27 of the input shaft 25. The electromagnet 65 includes an annular electromagnetic coil 65a and an annular core 65b that supports the electromagnetic coil 65a. The core 65b is fixed to a lid member 66 that is fixed to an open side of the housing 33. A third rolling bearing 68 is disposed between a cylindrical bearing support portion 67 extending from the lid member 66 in the first direction X1 and the inner shaft 27 of the input shaft 25. A second-direction-X2-side end of the inner shaft 27 of the input shaft 25 is supported via the third rolling bearing 68 and the lid member 66 so as to be rotatable with respect to the housing 33 and not to be movable in the axial direction X.

As illustrated in FIG. 2, the clutch unit 1 further includes a rotation interlocking structure 69 that causes the first and second width defining portions 47, 54 to move with rotation of the output shaft 26, in the same rotational direction as the output shaft 26, when the two-way clutch 31 is in the on state. The rotation interlocking structure 69 includes elastic members 71 disposed between the armature 63 and the rotor 64. For example, the elastic members 71 are each a coil spring that can expand and contract in the axial direction X, and are disposed at regular intervals in the circumferential direction C. The elastic members 71 are compressed between the armature 63 and the rotor 64. Accordingly, the separators SP are elastically pressed against the output shaft 26.

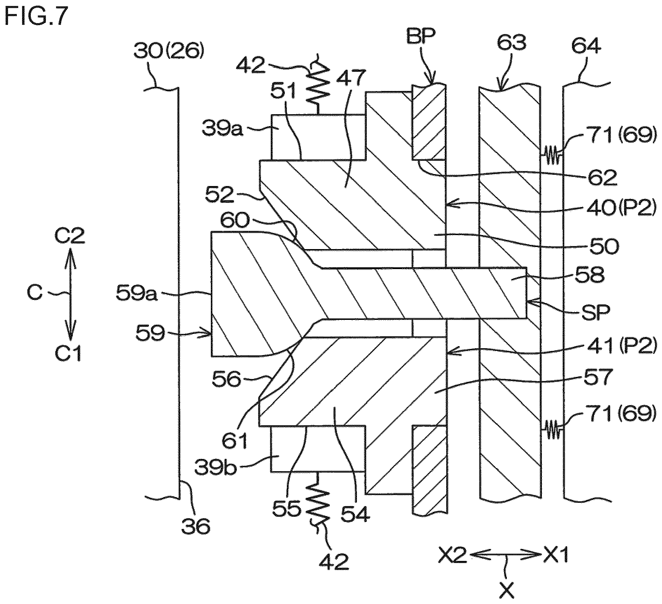

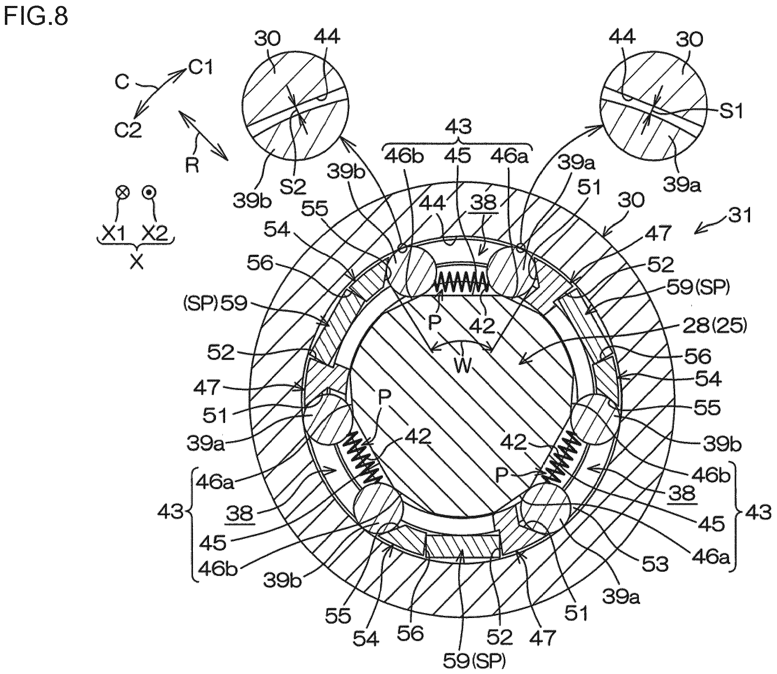

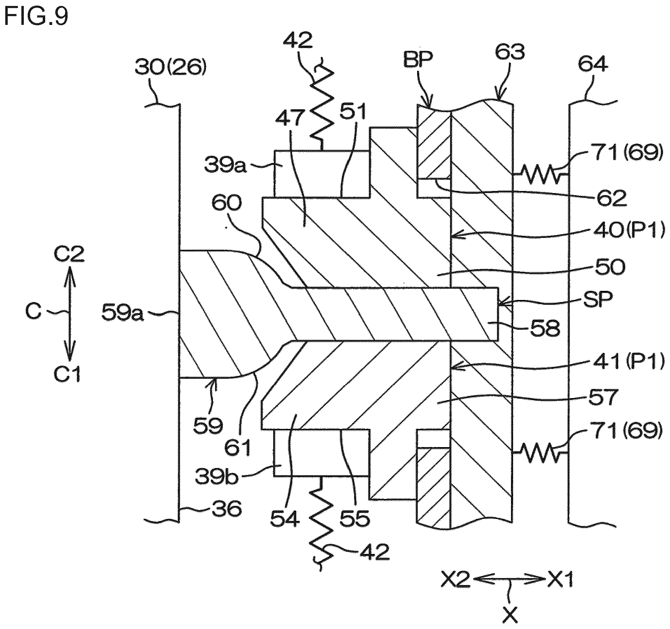

Each separator SP is coupled to the armature 63 such that the wedge portion 59 is aligned in the circumferential direction as viewed from the axial direction X. Depending on the accuracy in attaching each separator SP to the armature 63, the attitude of the wedge portion 59 of each separator SP in the rotational direction about the shaft portion 58 may be inclined with respect to the expected attitude. FIG. 7 is a cross-sectional view schematically illustrating the off state of the clutch unit 1, taken along the section line VII-VII of FIG. 3. FIG. 8 schematically illustrates the off state of the clutch unit 1. FIGS. 9, 10A, and 10B schematically illustrate the on state of the clutch unit 1. FIG. 10A illustrates a state in which the output shaft 26 is rotated in the C1 direction with respect to the input shaft 25, and FIG. 10B illustrates a state in which the output shaft 26 is rotated in the C2 direction with respect to the input shaft 25.

The two-way clutch 31 (clutch unit 1) can be switched between the on state and the off state by changing the relative positions of the first cage 40 and the second cage 41. The relative positions of the first cage 40 and the second cage 41 are changed by moving the separators SP in the axial direction X. Each separator SP is movable between a predetermined disconnection position (the position of the separator SP illustrated in FIG. 7) retracted toward the first direction X1 side and a connection position (the position of the separator SP illustrated in FIG. 9) on the second direction X2 side with respect to the disconnection position.

When the separators SP are in the connection position, the relative positions of the first and second cages 40, 41 are first positions P1 (the relative positions of the first and second cages 40, 41 illustrated in FIGS. 9, 10A, and 10B). In this case, the circumferential width of each pair of rollers 39a, 39b defined by the first width defining portion 47 and the second width defining portion 54 is relatively large.

If a current is applied to the electromagnet 65 (see FIG. 2) while the separators SP are in the connection position, the electromagnet 65 attracts the armature 63. Accordingly, the separators SP coupled to the armature 63 are pulled to the first direction X1 side. The separators SP that have been pulled are displaced in the first direction X1 and placed in the disconnection position (the position illustrated in FIG. 7).

Referring to FIGS. 6 and 7, when each separator SP is displaced to the first direction X1 side, the first sliding contact surface 60 of the separator SP slides on the first sliding contacted surface 52 of the first width defining portion 47 while pressing the first width defining portion 47 to the circumferential direction C2 side. Thus, the first width defining portion 47 moves to the circumferential direction C2 side. When each separator SP is displaced to the first direction X1 side, the second sliding contact surface 61 of the separator SP slides on the second sliding contacted surface 56 of the second width defining portion 54 while pressing the second width defining portion 54 to the circumferential direction C1 side. Thus, the second width defining portion 54 moves to the circumferential direction C1 side. That is, when each separator SP is displaced to the first direction X1 side, the first width defining portion 47 and the second width defining portion 54 that is adjacent thereto and spaced therefrom in the circumferential direction C1 move away from each other. Accordingly, when each separator SP is displaced to the first direction X1 side, the circumferential width W of the pairs of rollers 39a, 39b on both sides of the separator SP is reduced. The circumferential width W is defined by defined by the first and second width defining portions 47, 54. In this case, the first cage 40 rotates in the circumferential direction C2 with respect to the separators SP, while the second cage 41 rotates in the circumferential direction C1 with respect to the separators SP. The first restricting projections 50 then each engage with a circumferential-direction-C2-side end of the elongated hole 62 of the back plate BP, so that the movement of the first width defining portion 47 is restricted. The second restricting projections 57 each engage with a circumferential-direction-C1-side end of the elongated hole 62, so that the movement of the second width defining portion 54 is restricted.

When each separator SP is placed in the disconnection position, that is, when the relative positions of the first and second cages 40, 41 are changed to second positions P2 (the relative positions of the first and second cages 40, 41 in FIG. 7), each first width defining portion 47 is moved to the circumferential direction C2 side, so that the first pressing surface 51 of each first width defining portion 47 presses the corresponding first roller 39a toward the circumferential C2 side. Each first roller 39a is then moved to the circumferential direction C2 side against the elastic biasing force of the elastic body 42. Thus, as illustrated in FIG. 8, each first roller 39a moves from the inclined surface 46a toward the main surface 45, so that a clearance S1 is formed between each first roller 39a and the inner peripheral surface portion 44 of the outer ring 30. That is, each first roller 39a is disengaged from the cam surface 43 of the inner ring 28 and the inner peripheral surface portion 44 of the outer ring 30.

Each second width defining portion 54 moves to the circumferential direction C1 side, so that the second pressing surface 55 of each second width defining portion 54 presses the corresponding second roller 39b toward the circumferential direction C1 side. Each second roller 39b is then moved to the circumferential direction C1 side against the elastic biasing force of the elastic body 42. Thus, as illustrated in FIG. 8, each second roller 39b moves from the inclined surface 46b toward the main surface 45, so that a clearance S2 is formed between each second roller 39b and the inner peripheral surface portion 44 of the outer ring 30. That is, each second roller 39b is disengaged from the cam surface 43 of the inner ring 28 and the inner peripheral surface portion 44 of the outer ring 30.

When the relative positions of the first and second cages 40, 41 are changed to the second positions P2, the two-way clutch 31 is placed in the off state in which the rollers 39a, 39b are disengaged from the inner peripheral surface portion 44 in each wedge space 38 to have the clearances S1, S2. In the above description, the clearance S1 is formed between the roller 39a and the inner peripheral surface portion 44 of the outer ring 30, and the clearance S2 is formed between the roller 39b and the inner peripheral surface portion 44 of the outer ring 30. However, the clearance S1 may be formed between the roller 39a and the cam surface 43 of the inner ring 28, and the clearance S2 may be formed between the roller 39b and the cam surface 43 of the inner ring 28.

On the other hand, when application of a current to the electromagnet 65 (see FIG. 2) is stopped, the armature 63 is not attracted by the electromagnet 65. When the armature 63 is not attracted, the elastic biasing force of each elastic body 42 is applied via the corresponding pair of rollers 39a, 39b. Thus, the first sliding contact surface 60 of each separator SP is displaced from the first sliding contacted surface 52 to the second direction X2 side, and the second sliding contact surface 61 of the separator SP is displaced from the second sliding contacted surface 56 to the second direction X2 side. Thus, the first width defining portion 47 moves to the circumferential direction C1 side, and the second width defining portion 54 moves to the circumferential direction C2 side. As a result, the first width defining portion 47 and the second width defining portion 54 corresponding to the same separator SP move toward each other, and come into contact with the outer peripheral surface 58b of the shaft portion 58 of the separator SP. This restricts a relative movement of the first and second cages 40 and 41, so that the first and second cages 40 and 41 are positioned in the first positions P1. Thus, the separator SP is placed again in the connection position (the position of the separator SP in FIG. 9).

Furthermore, when each separator SP is displaced in the second direction X2, the first width defining portion 47 and the second width defining portion 54 do not exert a pressing force. Accordingly, the paired rollers 39a, 39b are moved away from each other by the elastic biasing force of the elastic body 42. The first roller 39a is moved to the circumferential direction C1 side, and the second roller 39b is move to the circumferential direction C2 side. Thus, the rollers 39a, 39b are moved from the main surface 45 onto the inclined surfaces 46a, 46b, respectively, so that the two-way clutch 31 is placed in the on state in which the rollers 39a, 39b can engage with the inner peripheral surface portion 44.

When the two-way clutch 31 is in the on state, the input shaft 25 and the output shaft 26 usually rotate together. However, the input shaft 25 and the output shaft 26 may rotate relative to each other until either one of the rollers 39a, 39b engages with the cam surface 43 and the inner peripheral surface portion 44. When the two-way clutch 31 is in the on state, as illustrated in FIG. 9, a second-direction-X2-side end 59a of the wedge portion 59 of the separator SP is in contact with (the side surface of) the annular stepped portion 36. The separator SP is elastically pressed against the output shaft 26 by the elastic members 71 of the rotation interlocking structure 69. This generates friction between the separator SP and the output shaft 26. When the separator SP is in this state, in accordance with rotation of the output shaft 26, the first and second width defining portions 47, 54 move (rotate together) in the same rotational direction as the output shaft 26.

FIGS. 11A and 11B are partial enlarged cross-sectional views illustrating controlling the relative positions of the cages 40, 41. When the two-way clutch 31 is in the on state, as illustrated in FIG. 11A, the width defining portions 47, 54 that are disposed with the shaft portion 58 of the separator SP interposed therebetween in the circumferential direction C come into contact with the outer peripheral surface 58b of the shaft portion 58. In this state, the distance between the width defining portions 47, 54 is maintained constant due to the diameter of the shaft portion 58. Thus, the relative positions of the first and second cages 40, 41 are set to the first positions P1. That is, each shaft portion 58 restricts the circumferential width W (see FIGS. 3 and 8) of the pairs of rollers 39a, 39b on both sides of the separator SP.

As illustrated in FIG. 9, when the two-way clutch 31 is in the on state, that is, when the first and second cages 40, 41 are in the first positions P1, the circumferential width W of the pairs of rollers 39a, 39b on both sides of the separator SP is set to be relatively small. The circumferential width W is a distance that does not allow both the paired rollers 39a, 39b to engage with the cam surface 43 and the inner peripheral surface portion 44 without any clearance when the elastic body 42 is in the free state. In other words, the circumferential width W is a distance that allows one of the paired rollers 39a, 39b to engage with the cam surface 43 and the inner peripheral surface portion 44 without any clearance. However, the circumferential width W is set to a distance that creates a clearance S3, S4 (see enlarged views in FIGS. 10A and 10B) between the other of the paired rollers 39a, 39b and the cam surface 43 or the inner peripheral surface portion 44.

Here, consider the case where each pair of the width defining portions 47, 54 is in contact with the wedge portion 59 of the corresponding separator SP in the circumferential direction C when in the on state. In this case, depending on the attitude of the separator SP in the rotational direction about the shaft portion 58, the circumferential width of the shaft portion 58 is significantly increased, so that the circumferential width W of the pairs of rollers 39a, 39b on both sides of the separator SP becomes smaller than expected. Furthermore, the clearance S3, S4 between the roller on the upstream side in the rotational direction and the cam surface 43 or the inner peripheral surface portion 44 may become extremely large. In this case, the play of the steering member 4 (see FIG. 1) is increased, which may impair the steering feeling.

Meanwhile, in this embodiment, since each pair of the width defining portions 47, 54 is in contact with the shaft portion 58 of the corresponding separator SP in the circumferential direction C, the circumferential positions of the width defining portions 47, 54 can be accurately set to the expected positions (the first positions PI). Furthermore, in the case where the shape of the shaft portion in a cross section about its axis is rectangular as illustrated in FIG. 11B (the shaft portion in this case is referred to as a shaft portion 358), even if the width defining portions 47, 54 are in contact with the shaft portion 358 of the separator SP, the circumferential width of the shaft portion 358 is increased when the attitude of the separator SP in the rotational direction about the shaft portion 358 is displaced from the expected attitude (as indicated by the long dashed double-short dashed line in FIG. 11B). Thus, the circumferential width W of the pairs of rollers 39a and 39b on both sides of the separator SP may become smaller than expected. In this case, the clearance S3, S4 between the roller disposed upstream in the rotational direction and the cam surface 43 or the inner peripheral surface portion 44 becomes large, which may impair the steering feeling.

Moreover, when the corners of the shaft portion 358 come into contact with the width defining portions 47, 54, the stress generated in each of the width defining portions 47, 54 is increased. Therefore, the width defining portions 47, 54 made of a resin material may be deformed. As a result, the clearance S3, S4 between the roller disposed upstream in the rotational direction and the cam surface 43 or the inner peripheral surface portion 44 may vary. Meanwhile, in this embodiment, the entire circumferential area of the outer peripheral surface 58b of the shaft portion 58 of the separator SP is formed by a cylindrical surface that is concentric with the shaft portion 58. Therefore, the circumferential width of the shaft portion 58 of the separator SP can be maintained constant regardless of the attitude of the separator SP in the rotational direction about the shaft portion 58. Thus, the first positions P1 can be more accurately defined regardless of the attitude of the separator SP in the rotational direction about the shaft portion 58. As a result, it is possible to maintain a satisfactory steering feeling when the two-way clutch 31 is in the on sate.

Since the shaft portion 58 does not have any corner, even when the shaft portion 58 is brought into contact with the width defining portions 47, 54, the stress generated in each of the width defining portions 47, 54 is not increased. Therefore, the width defining portions 47, 54 are not deformed. As illustrated in FIG. 10A, when the two-way clutch 31 is in the on state, that is, when the relative positions of the first and second cages 40, 41 are the first positions P1, as the output shaft 26 rotates with respect to the input shaft 25, the first and second width defining portions 47, 54 move in the same rotational direction as the output shaft 26 due to the action of the rotation interlocking structure 69.

When the two-way clutch 31 is in the on state, the output shaft 26 rotates to, for example, the circumferential direction C1 side with respect to the input shaft 25 in response to an operation of the steering member 4 (see FIG. 1) or a reverse input from the steered wheels 3 (see FIG. 1). In this case (in the case where a rotational torque to the circumferential direction C1 side is generated in the output shaft 26), as illustrated in FIG. 10A, the second roller 39b of the rollers 39a, 39b that is disposed on the upstream side (the circumferential direction C2 side) is moved such that the clearance S3 is formed between the second roller 39b and the cam surface 43 or the inner peripheral surface portion 44. The second roller 39b moves the first roller 39a on the downstream side (the circumferential direction C1 side) via the elastic body 42 such that the first roller 39a engages with the cam surface 43 and the inner peripheral surface portion 44 without any clearance. This allows transmission of a rotational force between the input shaft 25 and the output shaft 26.

Meanwhile, in the case where the output shaft 26 rotates to the circumferential direction C2 side with respect to the input shaft 25 (in the case where a rotational torque to the circumferential direction C2 side is generated in the output shaft 26), as illustrated in FIG. 10B, the first roller 39a of the rollers 39a, 39b that is disposed on the upstream side (the circumferential direction C1 side) is moved such that the clearance S4 is formed between the first roller 39a and the cam surface 43 or the inner peripheral surface portion 44. The first roller 39a moves the second roller 39b on the downstream side (the circumferential direction C2 side) via the elastic body 42 such that the second roller 39b engages with the cam surface 43 and the inner peripheral surface portion 44 without any clearance. This allows transmission of a rotational force between the input shaft 25 and the output shaft 26.

As described above, according to this embodiment, when the two-way clutch 31 is in the on state, the roller (the roller 39a or the roller 39b) on the downstream side in the rotational direction engages with the cam surface 43 and the inner peripheral surface portion 44 without any clearance. Therefore, when the two-way clutch 31 is in the on state, it is possible to appropriately transmit the rotational force between the input shaft 25 and the output shaft 26. When the two-way clutch 31 is in the on state, the roller (the roller 39a or the roller 39b) on the upstream side in the rotational direction has the clearance S3, S4 from the cam surface 43 or the inner peripheral surface portion 44. That is, when the two-way clutch 31 is in the on state, only one of the paired rollers 39a, 39b engages with the cam surface 43 and the inner peripheral surface portion 44. Therefore, the rotational torque does not remain between the roller and the cam surface 43 and the inner peripheral surface portion 44. Even if the rotational torque remains, the rotational torque is small. Thus, when switching the state of transmission of a rotational force between the input shaft 25 and the output shaft 26 from the on state to the off state, it is possible to smoothly disengage the rollers 39a, 39b from the cam surface 43 and the inner peripheral surface portion 44. Accordingly, it is possible to smoothly switch the state of transmission of a rotational force between the input shaft 25 and the output shaft 26.

When the two-way clutch unit 31 is in the on state, each of the cages 40, 41 is in contact with the outer peripheral surfaces 58b of the shaft portions 58. Thus, the first positions P1 of the cages 40, 41 are defined. Even if the attitude of each separator SP in the rotational direction about the shaft portion 58 is inclined with respect to the expected attitude, the circumferential width of the shaft portion 58 is only slightly increased. Furthermore, the entire circumferential area of the outer peripheral surface 58b of the shaft portion 58 of the separator SP is formed by a cylindrical surface that is concentric with the shaft portion 58. Therefore, the circumferential width of the shaft portion 58 of the separator SP can be maintained constant regardless of the attitude of the separator SP in the rotational direction about the shaft portion 58. Thus, the first positions P1 can be accurately defined regardless of the attitude of the separator SP in the rotational direction about the shaft portion 58. As a result, it is possible to maintain a satisfactory steering feeling when the two-way clutch 31 is in the on sate.

The shaft portion 58 is not limited to a shaft having a cylindrical outer shape. For example, as in a first modification illustrated in FIG. 12, the outer cross-sectional shape of a shaft portion 158 may be a D-shape. In this case, the outer surface of the shaft portion 158 includes a cylindrical surface 170 including contact areas with the cages 40, 41, and a flat surface 171. The cylindrical surface 170 is concentric with the shaft portion 158.

For example, as in a second modification illustrated in FIG. 13, a shaft portion 258 may have a so-called width across flat shape. In this case, the outer surface of the shaft portion 258 includes two cylindrical surfaces 270 each including contact areas with the cages 40, 41, and two flat surfaces 271. The cylindrical surfaces 270 are concentric with the shaft portion 258. The diameters of the shaft portions 58, 158, 258 may increase or decrease in the axial direction X.

The cylindrical surfaces 70, 170, 270 may be formed in only portions of the shaft portions 58, 158, 258, respectively, in the axial direction X. Various modifications may be made to the present invention without departing from the scope of the present invention.

## Claims

1. A driving force transmission device (1) that is disposed between a first shaft (25) and a second shaft (26) which are disposed coaxially with each other, and that switches between on and off of transmission of a rotational force between the first shaft (25) and the second shaft (26), the first shaft (25) including an outer peripheral surface portion (43), the second shaft (26) including an inner peripheral surface portion (44) facing the outer peripheral surface portion (43), wherein at least one wedge space (38) is formed between the outer peripheral surface portion (43) and the inner peripheral surface portion (44), the driving force transmission device (1) comprising:
a pair of rollers (39a, 39b) disposed in the wedge space (38);
an elastic body (42) elastically biasing the rollers (39a, 39b) away from each other in a circumferential direction (C); and
a pair of cage members (40, 41) holding each of the rollers (39a, 39b) in the wedge space (38), the cage members (40, 41) being movable relative to each other and defining a circumferential width of the pair of rollers (39a, 39b); wherein:
when the relative positions of the cage members (40, 41) in the circumferential direction (C) are changed from first positions (P1) to second positions (P2), the rollers (39a, 39b) are moved toward each other against an elastic biasing force of the elastic body (42) such that an off state is achieved; and
when the relative positions of the cage members (40, 41) in the circumferential direction (C) are changed from the second positions (P2) to the first positions (P1), the rollers (39a, 39b) are moved away from each other by the elastic biasing force such that an on state is achieved; **characterized in that**,
the driving force transmission device (1) further comprises:
a separator (SP) including a shaft portion (58, 158, 258) and displaceable in an axial direction (X) of the first shaft (25) and the second shaft (26), the separator (SP) being configured to change relative positions of the cage members (40, 41) in the circumferential direction (C) when the separator (SP) is displaced in the axial direction (X); wherein
in said off state in which each of the rollers (39a, 39b) are disengaged from the outer peripheral surface portion (43) or the inner peripheral surface portion (44) to have a clearance therefrom;
and in said on state in which one of the rollers (39a, 39b) on a downstream side in a rotational direction engages with the outer peripheral surface portion (43) and the inner peripheral surface portion (44) without any clearance while the other of the rollers (39a, 39b) on an upstream side in the rotational direction has a clearance from the outer peripheral surface portion (43) or the inner peripheral surface portion (44); and
the first positions (P1) of the cage members (40, 41) are defined when the cage members (40, 41) that are disposed with the shaft portion (58, 158, 258) interposed therebetween in the circumferential direction (C) are in contact with an outer surface of the shaft portion (38).

2. The driving force transmission device (1) according to claim 1, wherein the outer surface of the shaft portion (58, 158, 258) includes a cylindrical surface (70, 170, 270) concentric with the shaft portion (58, 158, 258) in contact areas with the cage members (40, 41).

3. The driving force transmission device (1) according to claim 1 or 2, wherein an entire circumferential area of the outer surface of the shaft portion (58, 158, 258) is formed by a cylindrical surface (70, 170, 270) that is concentric with the shaft portion (58, 158, 258).

4. The driving force transmission device (1) according to any one of claims 1 to 3, wherein the separator (SP) includes a bulging portion (59) bulging in the circumferential direction (C) from a part of the shaft portion (58, 158, 258), the bulging portion (59) being out of contact with the cage members (40, 41) when the cage members (40, 41) are located in the first positions (P1).

## Patentansprüche

1. Antriebskraftübertragungsvorrichtung (1), die zwischen einer ersten Welle (25) und einer zweiten Welle (26) angeordnet ist, welche koaxial zueinander angeordnet sind, und die zwischen einem An- und einem Auszustand einer Übertragung einer Rotationskraft zwischen der ersten Welle (25) und der zweiten Welle (26) schaltet, wobei die erste Welle einen Außenumfangsflächenabschnitt (43) aufweist und die zweite Welle (26) einen Innenumfangsflächenabschnitt (44) aufweist, der dem Außenumfangsflächenabschnitt (43) zugewandt ist, wobei zumindest ein Keilraum (38) zwischen dem Außenumfangsflächenabschnitt (43) und dem Innenumfangsflächenabschnitt (44) ausgebildet ist, wobei die Antriebskraftübertragungsvorrichtung (1) aufweist:
ein Paar Rollen (39a, 39b), das in dem Keilraum (38) angeordnet ist;
einen elastischen Körper (42), der die Rollen (39a, 39b) in eine Umfangsrichtung (C) elastisch voneinander wegvorspannt; und
ein Paar Käfigelemente (40, 41), das jede Rolle (39a 39b) in dem Keilraum (38) hält, wobei die Käfigelemente (40, 41) relativ zueinander beweglich sind und eine Umfangsbreite des Rollenpaars (39a, 39b) definieren; wobei:
wenn die Relativpositionen der Käfigelemente (40, 41) in der Umfangsrichtung von den ersten Positionen (P1) zu den zweiten Positionen (P2) gewechselt werden, die Rollen (39a, 39b) gegen eine elastische Vorspannkraft des elastischen Körpers (42) aufeinander zu bewegt werden, sodass ein Aus-Zustand erreicht wird; und
wenn die Relativpositionen der Käfigelemente (40, 41) in der Umfangsrichtung (C) von den zweiten Positionen (P2) zu den ersten Positionen (P1) gewechselt werden, werden die Rollen (39a, 39b) durch die elastische Lenkkraft voneinander wegbewegt, sodass ein An-Zustand erreicht wird; **dadurch gekennzeichnet, dass**
die Antriebskraftübertragungsvorrichtung (1) weiterhin aufweist:
einen Separator (SP), der einen Schaftabschnitt (58, 158, 258) aufweist und in eine Axialrichtung (X) der ersten Welle (25) und der zweiten Welle (26) verschieblich ist, wobei der Separator (SP) konfiguriert ist, Relativpositionen der Käfigelemente (40, 41) in der Umfangsrichtung (C) zu wechseln, wenn der Separator (SP) in die Axialrichtung (X) verschoben ist; wobei
in dem Aus-Zustand, in dem der Eingriff jeder Rolle (39a, 39b) in den Außenumfangsflächenabschnitt (43) oder in den Innenumfangsflächenabschnitt (44) gelöst ist, um einen Abstand dazu zu haben;
und in dem An-Zustand, in dem eine der Rollen (39, 39b) auf einer stromabwärtigen Seite in einer Rotationsrichtung mit dem Außenumfangsflächenabschnitt (43) und dem Innenumfangsflächenabschnitt (44) ohne jeglichen Zwischenraum in Eingriff steht, während die andere Rolle (39a, 39b) auf einer stromaufwärtigen Seite in der Rotationsrichtung einen Abstand von dem Außenumfangsflächenabschnitt (43) oder von dem Innenumfangsflächenabschnitt (44) hat; und
die ersten Positionen (P1) der Käfigelemente (40, 41) definiert sind, wenn die Käfigelemente (40, 41), die mit dem Schaftabschnitt (58, 158, 258), der dazwischen in der Umfangsrichtung (C) angeordnet ist, mit einer Außenfläche des Schaftabschnittes (58) in Kontakt stehen.

2. Antriebskraftübertragungsvorrichtung (1) gemäß Anspruch 1, wobei die Außenfläche des Schaftabschnittes (58, 158, 258) eine zylindrische Fläche (70, 170, 270) aufweist, die mit dem Schaftabschnitt (58, 158, 258) in Kontaktflächen mit den Käfigelementen (40, 41) konzentrisch ist.

3. Antriebskraftübertragungsvorrichtung (1) gemäß Anspruch 1 oder 2, wobei
eine gesamte Umfangsfläche der Außenfläche des Schaftabschnittes (58, 158, 258) durch eine zylindrische Fläche (70, 170, 270) ausgebildet ist, die mit dem Schaftabschnitt (58, 158, 258) konzentrisch ist.

4. Antriebskraftübertragungsvorrichtung (1) gemäß einem der Ansprüche 1 bis 3, wobei der Separator (SP) einen Ausbuchtungsabschnitt (59) aufweist, der von einem Teil des Schaftabschnittes (58, 158, 258) aus in die Umfangsrichtung ausgebuchtet ist, wobei der Ausbuchtungsabschnitt (59) ohne Kontakt zu den Käfigelementen (40, 41) ist, wenn sich die Käfigelemente (40, 41) an den ersten Positionen (P1) befinden.

## Revendications

1. Dispositif de transmission de force motrice (1) qui est disposé entre un premier arbre (25) et un second arbre (26) qui sont disposés coaxialement l'un par rapport à l'autre, et qui commute entre l'activation et la désactivation de la transmission d'une force de rotation entre le premier arbre (25) et le second arbre (26), le premier arbre (25) incluant une partie de surface périphérique externe (43), le second arbre (26) incluant une partie de surface périphérique interne (44) faisant face à la partie de surface périphérique externe (43), dans lequel au moins un espace de coin (38) est formé entre la partie de surface périphérique externe (43) et la partie de surface périphérique interne (44), le dispositif de transmission de force motrice (1) comprenant :
une paire de rouleaux (39a, 39b) disposés dans l'espace de coin (38) ;
un corps élastique (42) sollicitant élastiquement les rouleaux (39a, 39b) en les éloignant l'un de l'autre dans une direction circonférentielle (C) ; et
une paire d'éléments de cage (40, 41) maintenant chacun des rouleaux (39a, 39b) dans l'espace de coin (38), les éléments de cage (40, 41) étant mobiles l'un par rapport à l'autre et définissant une largeur circonférentielle de la paire de rouleaux (39a, 39b) ; dans lequel
lorsque les positions relatives des éléments de cage (40, 41) dans la direction circonférentielle (C) passent des premières positions (P1) aux secondes positions (P2), les rouleaux (39a, 39b) sont déplacés l'un vers l'autre sous l'effet d'une force de sollicitation élastique du corps élastique (42) de sorte qu'un état de désactivation est atteint ; et
lorsque les positions relatives des éléments de cage (40, 41) dans la direction circonférentielle (C) passent des secondes positions (P2) aux premières positions (P1), les rouleaux (39a, 39b) s'éloignent l'un de l'autre sous l'effet de la force de sollicitation élastique de sorte qu'un état d'activation est atteint ; **caractérisé en ce que**,
le dispositif de transmission de force motrice (1) comprend en outre :
un séparateur (SP) incluant une partie d'arbre (58, 158, 258) et déplaçable dans une direction axiale (X) du premier arbre (25) et du second arbre (26), le séparateur (SP) étant configuré pour modifier les positions relatives des éléments de cage (40, 41) dans la direction circonférentielle (C) lorsque le séparateur (SP) est déplacé dans la direction axiale (X) ; dans lequel dans ledit état de désactivation dans lequel chacun des rouleaux (39a, 39b) est hors prise par rapport à la partie de surface périphérique externe (43) ou la partie de surface périphérique interne (44) de sorte à ce qu'il y ait un jeu entre eux ;
et dans ledit état d'activation dans lequel l'un des rouleaux (39a, 39b) sur un côté en aval dans une direction de rotation se met en prise avec la partie de surface périphérique externe (43) et la partie de surface périphérique interne (44) sans aucun jeu alors que les autre rouleaux (39a, 39b) sur un côté en amont dans la direction de rotation ont un jeu par rapport à la partie de surface périphérique externe (43) ou la partie de surface périphérique interne (44) ; et
les première positions (P1) des éléments de cage (40, 41) sont définies lorsque les éléments de cage (40, 41) qui sont disposés avec la partie d'arbre (58, 158, 258) intercalée entre eux dans la direction circonférentielle (C) sont en contact avec une surface externe de la partie d'arbre (38).

2. Dispositif de transmission de force motrice (1) selon la revendication 1, dans lequel la surface externe de la partie d'arbre (58, 158, 258) inclut une surface cylindrique (70, 170, 270) concentrique avec la partie d'arbre (58, 158, 258) dans les zones de contact avec les éléments de cage (40, 41).

3. Dispositif de transmission de force motrice (1) selon la revendication 1 ou 2, dans lequel une zone circonférentielle entière de la surface externe de la partie d'arbre (58, 158, 258) est formée par une surface cylindrique (70, 170, 270) qui est concentrique avec la partie d'arbre (58, 158, 258).

4. Dispositif de transmission de force motrice (1) selon l'une quelconque des revendications 1 à 3, dans lequel le séparateur (SP) inclut une partie bombée (59) bombant dans la direction circonférentielle (C) à partir d'une partie de la partie d'arbre (58, 158, 258), la partie bombée (59) étant sans contact avec les éléments de cage (40, 41) lorsque les éléments de cage (40, 41) sont situés dans les premières positions (P1).
